# EUROPÄISCHE PATENTSCHRIFT

(11) **EP 2 942 192 B1**
(45) Veröffentlichungstag und Bekanntmachung des Hinweises auf die Patenterteilung: **14.10.2020**
(21) Anmeldenummer: 14167427.5
(22) Anmeldetag: 07.05.2014
(51) Int. Cl.: B32B 17/10, G02B 27/01

(54) **FLUORESZENZ-DISPLAY**
FLUORESCENCE DISPLAY
ÉCRAN À FLUORESCENCE

(43) Veröffentlichungstag der Anmeldung: 11.11.2015
(73) Patentinhaber: Kuraray Europe GmbH, 65795 Hattersheim (DE)
(72) Erfinder: KELLER, Uwe, 53177 Bonn (DE); LELLIG, Philipp, 53840 Troisdorf (DE); GREB, Marco, 63589 Linsengericht (DE)
(74) Vertreter: Janßen, Christian Oliver

(56) Entgegenhaltungen:
- EP-A1- 2 110 237
- EP-A1- 2 409 833
- DE-A1-102009 044 181
- US-A- 4 130 684
- US-A1- 2013 189 527
- US-A1- 2013 202 863

## Beschreibung

Die vorliegende Erfindung betrifft Fluoreszenz-Displays hergestellt unter Verwendung einer weichmacherarmen Folie aus Polyvinylacetal und einer weichmacherhaltigen Folie aus Polyvinylacetal.

### Technisches Gebiet

Zum Einspiegeln von Informationen in das Fahrersichtfeld finden aktuell in Personenkraftwagen sogenannte head-up displays (HUD) Anwendung. Hierfür wird von unten - aus einer im Armaturenbrettträger befindlichen Projektoreinheit - ein Bild an die Windschutzscheibe (WSS) projiziert, welches als virtuelles Bild vom Platz des Fahrers aus gesehen werden kann. Der Effekt beruht auf der Reflektionswirkung der zum Fahrzeuginnenraum hin orientierten Glasoberfläche sowie der zum Fahrzeugäußeren orientieren Glasoberfläche. Die inneren Glasoberflächen tragen fast nichts zur Reflektion bei, da diese bei dem gesetzlich vorgeschriebenen Verbundsicherheitsglas mit einer zwischen den Glasschichten befindlichen PVB-Folie verklebt sind, welches einen ähnlichen Brechungsindex wie Glas aufweist.

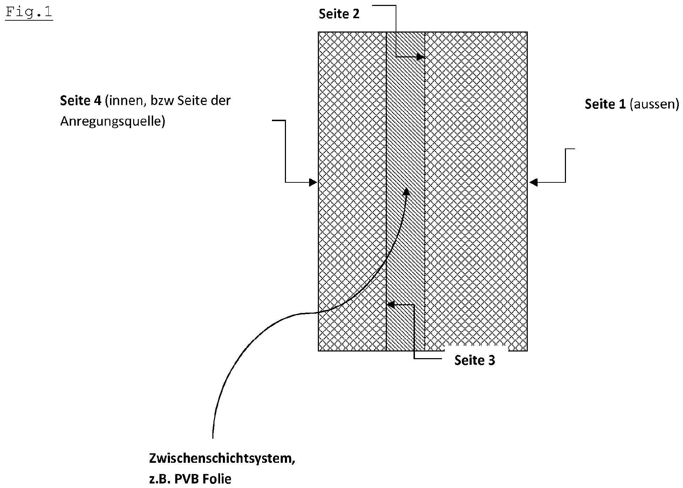

Zur einfacheren Benennung der vier Glasoberflächen einer Windschutzscheibe üblichen Aufbaus bedient man sich folgender in Fig. 1 gezeigter Konvention:
- Seite 1: äußere Oberfläche der zum Fahrzeugäußeren orientierten Scheibe des Verbundkörpers
- Seite 2: zur Zwischenschichtfolie orientierte innere Oberfläche der äußeren Scheibe im Verbundkörper
- Seite 3: zur Zwischenschichtfolie orientierte innere Oberfläche der inneren Scheibe im Verbundkörper
- Seite 4: zum Fahrzeuginneren hin orientierte Oberfläche der inneren Scheibe des Verbundkörpers

In aller Regel wird als Zwischenschichtfolie eine Folie aus weichgemachtem Polyvinylbutyral, kurz PVB-Folie verwendet.

Zur Elimination von Doppelbildern bei konventionellen HUD mit dem beschriebenen Funktionsprinzip müssen die Seite 1 und 4 zugehörigen Glasoberflächen einen bestimmten Winkel zueinander aufweisen. Dies wird durch Verwendung von PVB-Folien mit einem keilförmigen Dickenprofilverlauf realisiert. Solche Folien sind jedoch schwierig zu verarbeiten und aufwendig in der Herstellung, was sie wesentlich teurer als die nichtkeilförmigen Folienpendants werden lässt.

Weitere Nachteile von konventionellen HUD liegen darin, dass die Information nur in einem eingeschränkten Sichtfeld direkt vor dem Fahrer visualisiert werden kann und auch nur für diesen sichtbar ist. Tatsächlich gibt es aber viele Situationen, in welchen Informationen auch für Passagiere sichtbar bzw. an anderer Stelle der Windschutzscheibe eingeblendet werden sollen. Beispielsweise ist denkbar, als sicherheitsrelevante Warninformation die Kontur von auf oder neben der Fahrbahn befindlichen Hindernissen, wie sie in aktuellen Fahrzeugen bereits von Nachtsichtsystemen erfasst werden kann, direkt in die Windschutzscheibe zu projizieren. Auch wird bei einem konventionellen HUD durch auf der Windschutzscheibe befindliche Regentropfen das Bild verzerrt, da dann der der optimierten Systemkonfiguration zugrundeliegende Brechungsindexübergang zwischen Glas und Luft verfälscht wird.

Als Alternative zu diesen konventionellen HUD wurde bereits vorgeschlagen, durch in der Ebene der Windschutzscheibe angeordnete fluoreszierende Materialien und deren gezielter Anregung Bilder zu generieren (sog. Fluoreszenz-HUD). Die Anregung dieser Stoffe erfolgt mit für das menschliche Auge unsichtbarer UV-Strahlung, wodurch reale, nicht nur für den Fahrer sichtbare Bilder in Ebene der Windschutzscheibe erzeugt werden können. Als fluoreszierende Materialien wurden etwa entsprechende organische Farbstoffe, anorganische Partikel etc. vorgeschlagen.

### Stand der Technik

Zur Herstellung von Fluoreszenz-HUD ist bekannt, auf die Seite 4 der Windschutzscheibe fluoreszierende Pigmente oder Farbstoffe in Form von Beschichtungen, aufkaschierten Folien oder ähnlich aufzubringen. Alternativ wurde vorgeschlagen, zwischen Seite 3 und der PVB-Zwischenschicht Fluorophore enthaltende Folien zu positionieren bzw. die zu Seite 3 orientierte Oberfläche der PVB-Folie mit Fluorophoren zu bedrucken.

WO 2012/072950A1 offenbart, eine weichmacherhaltige PVB-Folie mit bestimmten niedermolekularen Fluorophoren so zu bedrucken, dass sich diese während des Autoklavenprozess gleichmäßig in der Folie verteilen. Hierbei sollen die Fluorophore gleichzeitig als UV-Absorber wirksam sein. WO 2012/072950A1 beschreibt hierzu die Verwendung von niedermolekularen Hydroxyterephthalatestern, insbesondere von 2,5-Dihydroxydiethylterephthalat, als Fluorophor sowie von Antioxidantien, welche auf eine PVB-Folie aufgebracht werden. Der Fluorophor verteilt sich hierbei in der PVB-Folie und kann entweder selber als UV-Absorber wirken oder sich mit einem in der Folie vorhandenem niedermolekularen UV-Absorber vermischen.

Aus WO2008132368 A9 ist bekannt, das Fluoreszenz-HUD ein oder mehrere anorganische Luminophorpartikel enthaltende Schichten in Dicken von weniger als 20 µm an der Seite 3 eines Verbundkörpers zusätzlich zu einer herkömmlichen weichmacherhaltigen PVB-Folie enthalten können. Es besteht hier aber die Möglichkeit dass teilweise eine unkontrollierte Anregung durch Sonnenlicht von außen erfolgen kann, da eine Resttransmission für UV-Strahlung bei herkömmlichen weichmacherhaltige PVB-Folien üblicherweise vorzufinden ist. Weiterhin muss Augenmerk darauf gerichtet werden, dass keine zu Trübung führende Lichtstreuung durch ungeeignet große Partikel auftritt. Die geringe Schichtdicke der die Luminophore enthaltenden Schichten von 20 µm begrenzt die einsetzbare Menge an Fluorophoren, da zu hohe Konzentrationen zu Trübungen führen. Damit ist auch die maximal erreichbare Intensität der Fluoreszenzemission begrenzt.

In US 2002/0120916 A1 sind head-up displays mit Fluorezenzfarbstoffen beschrieben, bei denen die dem Betrachter zugewandte Seite UV-Absorber enthält. Hiermit soll verhindert werden, dass die Anregungsstrahlung für die Fluoreszenzfarbstoffe durch das Display hindurch auf die Außenseite strahlt. Zu diesem Zweck sind in US 2011 1073773 A1 Fluorezenzdisplays offenbart, die ein opaques Material auf der dem Betrachter abgewandten Seite des Displays aufweist.

In EP 2409833 ist ein Fluorezenz-Display beschrieben, bei dem die Fluorezenzfarbstoffe auf der dem Sonnenlicht zugewandten Seite angeordnet sind.

Einige der Lösungsvorschläge nach dem Stand der Technik weisen zusätzlich den Nachteil auf, dass mit mehreren unterschiedlichen Folien gearbeitet werden muss, von welchen nicht Alle problemlos auf einer Glasoberfläche adhäriert werden können. Beispielsweise lässt sich eine ausreichend dünne PET-Folie zwar mit einem Fluoreszenzfarbstoff bedrucken bzw. kann ein solcher vielleicht auch direkt in PET eingemischt werden, nur weist PET keinerlei inhärente Haftung zu Glasoberflächen auf, wodurch sich die Notwendigkeit ergibt, mit zusätzlichen haftvermittelnden Schichten arbeiten zu müssen. Naheliegender Weise müsste solch eine dünne PET-Folie dann zwischen zwei PVB-Folien eingebettet werden. Dies erhöht aber die Kosten, die Fehleranfälligkeit und den Aufwand bei der Herstellung von entsprechenden Glaslaminaten. Des Weiteren ist PET wesentlich steifer als herkömmliche weichmacherhaltige PVB-Folien und bildet deshalb in Kombination mit gekrümmten Gläsern Wellen bzw. Falten. Die zu hohe Steifheit des PET bleibt überdies auch im Kontakt mit weichmacherhaltigen Folien bei Durchgang durch den für die Herstellung von Verbundsicherheitsglas typischen Laminierprozess erhalten, da PET nicht in der Lage ist, Weichmacher aufzunehmen und damit flexibler zu werden.

### Aufgabe

Es bestand daher die Aufgabe, Zwischenschichtfolien zur Herstellung von Fluoreszenz-Displays bereitzustellen, die einen einfacheren Aufbau als die bekannten Folien besitzen, in denen aber dennoch die Fluorophore vor unkontrollierter Sonnenlichtanregung geschützt sind.

Im Rahmen der Erfindung wird die o.g. in Fig. 1 dargestellte Konvention zur Bezeichnung der Oberflächen eines Glas/Glaslaminats auch bei Fluoreszenz-Displays aus Glas/Glaslaminaten für weitere Anwendungsfeldern, wie zum Beispiel Displayeinheiten zur Verwendung im Bau- und Werbebereich etc. eingesetzt. Hierbei bezeichnet dann Seite 4 die der Quelle für die Anregungsstrahlung zugewandte Seite.

### Darstellung der Erfindung

Gegenstand der vorliegenden Erfindung ist daher ein Fluoreszenz-Display, hergestellt durch laminieren von mindestens einer Folie A enthaltend ein Polyvinylacetal PA und optional mindestens einen Weichmacher WA und mindestens einer Folie B enthaltend ein Polyvinylacetal PB und mindestens einen Weichmacher WB zwischen zwei Glasscheiben, wobei jeweils vor dem Laminieren Folie A weniger als 22 Gew.% Weichmacher WA und 0,001 bis 5 Gew.% Fluorophore und Folie B mindestens 22 Gew.% Weichmacher WB und 0,005 - 5 Gew. % UV-Absorber aufweist.

Erfindungsgemäß weist die an Seite 2 des Fluoreszenz-Displays anliegende Zwischenschichtlage B eine hohe Lichttransmission und gleichzeitig eine geringe UV-Transmission auf. Hierdurch werden die folgenden Effekte erreicht: Schutz des dahinter befindlichen Fluorophors vor Ausbleichen, Verhindern des Verlassens von UV-Strahlung der Anregungsquelle, Verhindern der unkontrollierten Anregung durch den UV-Anteil der Sonnenstrahlung und Sicherstellen der üblicherweise geforderten geringen UV-Transmission für das Gesamtbauteil.

Die an Glasoberfläche 2 anliegende Folie B weist daher bei Messung im Verbund zwischen 2 x 2.1 mm Klarglas gemäß ISO 13837, Convention" A" (2008) eine UV-Transmission T_{UV}(400) von weniger als 30%, weniger als 20%, weniger als 15%, weniger als 8%, weniger als 6%, weniger 5%, bevorzugt weniger 4%, bevorzugt weniger als 3% und am meisten bevorzugt weniger als 2% auf. Zudem besitzt die an Glasoberfläche 2 anliegende Folie B bei Messung im Verbund zwischen 2 x 2.1 mm Klarglas und Aufnahme eines UV/VIS Transmissionsspektrums gemäß ISO 13837 (2008) eine UV-Transmission T_{UV} von nicht mehr als 50%, nicht mehr als 30%, nicht mehr als 15%, nicht mehr als 10%, nicht mehr als 5%, bevorzugt nicht mehr als 3%, bevorzugt nicht mehr als 2% und am meisten bevorzugt nicht mehr als 1%.

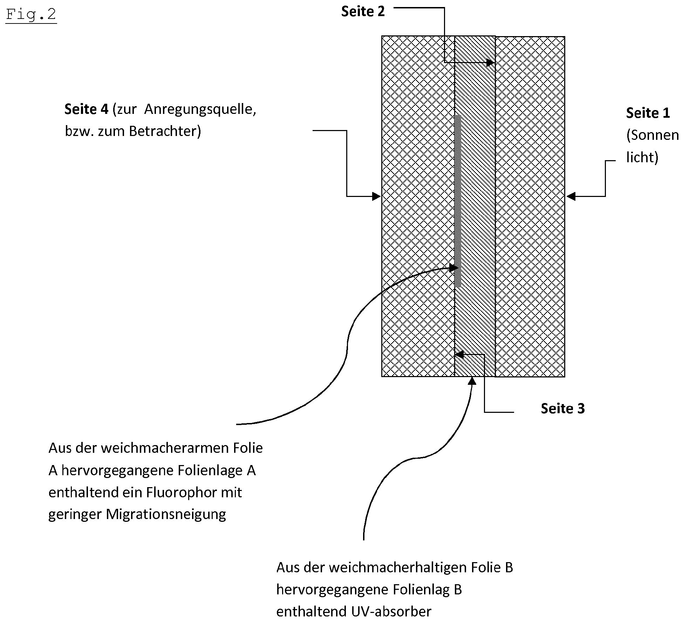

Die grundsätzliche Anordnung der Schichten bzw Folien A und B ist in Fig. 2 skizziert. Hier ist ein erfindungsgemäßes Fluoreszenz-Display mit einer dem Sonnenlicht zugewandten Seite 1 und einer der Anregungsstrahlung zugewandten Seite 4 dargestellt. Die Zwischenschichtlage B bzw. die weichmacherhaltige Folie B enthält UV-Absorber und die Zwischenschichtlage A bzw. weichmacherarme Folie A enthält die Fluorophoren.

Im Folgenden wird mit dem "Ausgangszustand" der Zustand der Folien A und B vor dem Laminieren, d.h. im noch getrennten Zustand verstanden.

Die Folien A und B können im Ausgangszustand vor dem Laminieren der Schichten als auch in dem im Fluoreszenz-Display befindlichen Zwischenschichtstapel einen einzigen Weichmacher als auch Gemische von Weichmachern sowohl unterschiedlicher und gleicher Zusammensetzung enthalten. Mit unterschiedlicher Zusammensetzung ist sowohl die Art der Weichmacher als auch deren Anteil im Gemisch gemeint. Bevorzugt weisen die Folie A und Folie B nach dem laminieren d.h. im fertig gestellten Fluoreszenz-Display den gleichen Weichmacher WA und WB auf. In einer bevorzugten Variante enthält die Folie A in ihrem Ausgangszustand aber keinen Weichmacher und nach dem Laminieren den Weichmacher WB.

Erfindungsgemäß verwendete weichmacherhaltige Folien B enthalten im Ausgangszustand vor dem Laminieren der Schichten mindestens 22 Gew%, wie 22.1 - 36.0 Gew.%, bevorzugt 24.0 - 32.0 Gew.% und insbesondere 26.0 - 30.0 Gew.% Weichmacher.

Erfindungsgemäß verwendete Folien A können im Ausgangszustand vor dem Laminieren der Schichten weniger als 22 (wie 21.9 Gew.%), weniger als 20 Gew.-%, weniger als 18 Gew.-%, weniger als 16 Gew.-%, weniger als 14 Gew.-%, weniger als 12 Gew.-%, weniger als 8 Gew.-%, weniger als 6 Gew.-%, weniger als 4 Gew.-%, weniger als 3 Gew.-%, weniger als 2 Gew.-%, weniger als 1 Gew-% oder gar keinen Weichmacher (0.0 Gew.%) enthalten. Bevorzugt enthalten die weichmacherarmen Folien A 0.0 - 8 Gew.-% Weichmacher.

Erfindungsgemäß können als Weichmacher WA, WB oder WC eine oder mehrere der folgenden, für PVB-Folie bekannten Weichmacher verwendet werden: Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8), Di-2-butoxyethyladipat (DBEA), Di-2-butoxyethoxyethyladipat (DBEEA), Di-2-butoxyethylsebacat (DBES), Di-2-ethylhexylphthalat (DOP), Di-isononylphthalat (DINP), Triethylenglykol-bis-isononanoat, Triethylenglykol-bis-2-propylhexanoat, 1,2-Cyclohexandicarbonsäurediisononylester (DINCH), Tris(2-ethylhexyl)phosphat (TOF) und Dipropylenglykolbenzoat.

Im erfindungsgemäßen Verfahren weist die Folie A im Ausgangszustand vor dem Laminieren der Schichten eine Dicke von nicht mehr als 20%, bevorzugt 15% und bevorzugt nicht mehr als 10% der Dicke der Folie bzw. der Folien B auf.

Die Dicke einer Folie A im Ausgangszustand vor dem Laminieren der Schichten beträgt 10 - 150 µm, bevorzugt 20 - 120 µm, bevorzugt 30 - 100 µm, bevorzugt 40 - 80 µm und am meisten bevorzugt 50 - 70 µm. Im Laminat nimmt die Dicke der Folie A durch Übergang von Weichmacher aus Folie B zu.

Die Folie A wird separat von Folie B hergestellt (z.B. extrudiert und weist entweder gar keinen Weichmacher oder einen geringen Weichmacheranteil auf, so dass sie bei der Herstellung und Weiterverarbeitung unter mechanischer Beanspruchung sich weder zu stark dehnt noch zu klebrig ist.

Die Dicke einer Folie B beträgt im Ausgangszustand 450 - 2500 µm, bevorzugt 600 - 1000 µm, bevorzugt 700 - 900 µm. Bei Verwendung mehrerer Folien B gilt entsprechendes für deren Gesamtdicke. Werden Folien B vor Herstellung des Sandwiches gereckt und / oder zusätzlich der Form einer Scheibe (z.B. Windschutzscheibe) bogenförmig angepasst, können sich die angegebenen Dicken zum Zeitpunkt der Lamination noch einmal um bis zu 20% verringern.

Mindestens eine Fluorophore aufweisende Folie A kann zu einer Glasoberfläche des erfindungsgemäßen Fluoreszenz-Displays orientiert sein.

Alternativ kann Folie A auch zwischen zwei oder mehr weichmacherhaltige Folien eingebettet verwendet werden und liegt in diesem Fall keiner der Glasoberflächen direkt an. So kann in erfindungsgemäßen Fluoreszenz-Displays eine Folie A zwischen eine Folie B und eine Folie C, enthaltend ein Polyvinylacetal PC und mindestens 22 Gew.% mindestens eines Weichmachers WC angeordnet sein.

Folie C kann den gleichen oder einen anderen UV-Absorber in jeweils gleicher oder geringer Menge wie Folie B aufweisen.

Bevorzugt weist Folie C keinen UV-Absorber oder einen nicht bei der Anregungswellenlänge des Fluorophor absorbierenden UV-Absorber auf.

Das Polyvinylacetal PC kann unterschiedlich oder identisch zu Polyvinylacetal PB sein. Weichmacher WC kann unterschiedlich oder identisch zu Weichmachers WB oder WA sein. Im einfachsten Fall besitzen Folie B und Folie C die gleiche Zusammensetzung in Bezug auf Polyvinylacetal und Weichmacher auf.

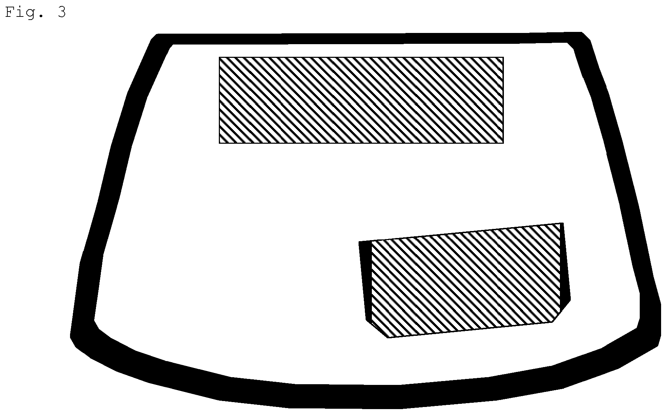

Die Zwischenschichtlage A kann dabei im Laminat dieselbe Fläche wie Zwischenschichtlage B oder eine geringere Fläche einnehmen. Insbesondere kann die Zwischenschichtlage A aber auch nur in Bereichen des Laminates angeordnet sein, in welchem mittels Anregung durch UV-Strahlung fluoreszierende Bilder bzw. Information angezeigt werden sollen. Eine solche Anordnung ist in Fig. 3 dargestellt

Die weichmacherarme fluorophorhaltige Folie A kann so zugeschnitten und positioniert werden, dass sie im Laminat nicht überall bis zum Rand des Laminates reicht. Insbesondere kann die Folie A im Randbereich um mindestens 1 mm kleiner sein als mindestens eine Glasscheibe sodass die Folie B in diesem Randbereich in direktem Kontakt mit mindestens einer Glasscheibe ist.

Bevorzugt wird Folie A aber nur in einem oder mehreren Teilbereichen eines erfindungsgemäßen Displays eingelegt und belegt in diesem Fall eine kleinere Fläche als die Gesamtfläche der Verglasung. Vorzugsweise werden die dünnen fluorophorhaltigen Folien A in jenen Teilbereichen des erfindungsgemäßen Displays angeordnet, in welchen später durch das dahin projiziertes UV-Licht Information durch Fluoreszenz dargestellt werden soll.

Weiterhin kann die im Ausgangszustand weichmacherarme oder weichmacherfreie Folie A vor dem Einlegen in den Foliensandwich perforiert werden, so dass sie Aussparungen wie Durchbrüche, Löcher, Schlitze in beliebigen geometrischen Mustern aufweisen kann.

So kann die Folie A mindestens eine Aussparung aufweisen, sodass die Folie B durch diese Aussparung in direktem Kontakt mit mindestens einer Glasscheibe ist. Nach dem Verkleben zum fertigen Display ist die Folie B mit im Ausgangszustand höherem Weichmachergehalt an diesen Stellen mit den Glasscheiben ohne Unterbrechung verklebt. Insbesondere können so Aussparungen an Stellen des Fluoreszenz-Displays erhalten werden, hinter welchen Sensor-, Optik-, Antennenelemente ansonsten durch Fluoreszenz in ihrer Funktion beeinträchtigt werden würden.

### UV-Absorber

Folie B enthält im Ausgangszustand UV-Absorber in einer Menge von 0,005 - 5 Gew.%, bevorzugt 0,1 bis 2 Gew%, besonders bevorzugt 0,2 - 1,0 Gew.% und insbesondere 0,1 - 0.8 Gew.% (jeweils bezogen auf die Schicht, in der die UV-Absorber ursprünglich enthalten sind).

Als UV-Absorber können die für weichmacherhaltige Polyvinylacetalfolien bekannten niedermolekularen UV-Absorber oder UV-Absorber mit geringer Migrations- oder Diffusionsneigung verwendet werden. In einer beispielhaften Anwendung des Fluoreszenz-Displays als Windschutzscheibe eines KFZ ermöglicht diese Anordnung, das sich die Fluorophore durch UV-Strahlung aus dem Fahrzeuginnenraum bzw. von Seite 4 einer Displayeinheit aus anregen lassen, ohne dass die eigentlich zur Anregung bereitgestellte Strahlung bereits vom UV-Absorber absorbiert wird.

Als niedermolekulare (konventionelle) UV-Absorber mit hohem Diffusionsvermögen können in Folie B z.B. Verbindungen des Benzotriazol-Typs wie etwa der Typen Tinuvin P, Tinuvin 328, Tinuvin 326, Tinuvin 327 oder substituierte Phenyltriazine vom Typ Tinuvin 1577 oder Cyasorb 1164 eingesetzt werden. Diese Verbindungen können während des Laminiervorgangs bzw. noch danach durch Diffusion in die aus Folie A hervorgegangene Zwischenschichtlage A übergehen, löschen die Fluoreszenz dort aber nicht vollständig, da unmittelbar hinter der Glasoberfläche ausreichende UV-Intensität verbleibt.

Als UV-Absorber der Folie B mit keinem oder nur geringem Diffusionsvermögen können z.B. Nanopartikel wie nano-TiO₂, UV-Absorbierende Polymere, in der vorliegenden Matrix aus Weichmacher und Polyvinylacetal schwer lösliche UV-Absorber z.b. vom Benzoxazinon-Typ, schwach substituierten Diphenylhydroxyphenyltriazin-Typ, ionische Gruppen aufweisende UV-Absorber, an das Polyvinylacetal chemisch angeknüpfte UV-Absorber, z.B. auf Basis Benzotriazol, Polymergebundene Crylen- oder Alkoxycrylengruppen, insbesondere solche mit einer Alkoxygruppe in einem der Phenylringe, wie z.b. in US 7.964.245 B2 aufgeführt, UV-absorbierende Polymere, wie sie in US 7008618 B1 genannt sind oder substituierte 2-Hydroxyphenylbenzotriazole, welche z.b. durch eine Erstergruppe an ein Polymer, insbesondere an ein Polyvinylacetal angebunden sind, verwendet werden.

Im Rahmen der vorliegenden Erfindung werden UV-Absorber als schwer löslich betrachtet, die bei 20 °C eine Löslichkeit von weniger als 5g/L in der Weichmacher/Polyvinylacetalmatrix der Folie B aufweisen. Ein Beispiel hierfür ist Cyasorb UV 3638F.

UV-Absorber mit geringer Migrations- oder Diffusionsneigung sind insbesondere: Polymere UV-Absorber wie z.B. Polyacrylene S1 der Firma Hallstar, UV-Absorber mit ionischen Gruppen, UV-Absorbierende Nanopartikel, als Partikel in der Folienmatrix vorliegende organische UV-Absorber.

UV-Absorber geringer Migrationsneigung sind insbesondere solche ausgewählt aus den Verbindungen der Formeln (1a), (1b), (2) oder (3) 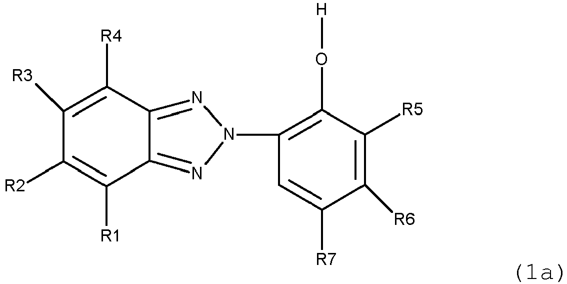 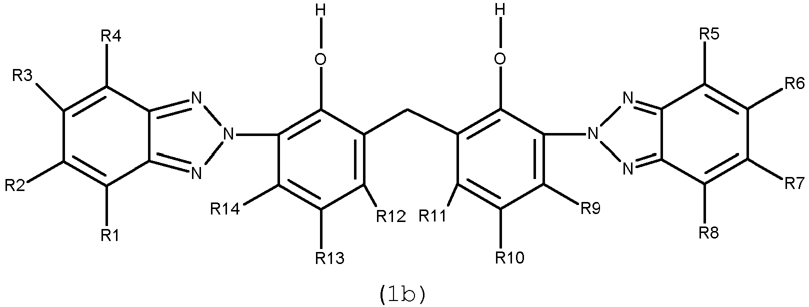 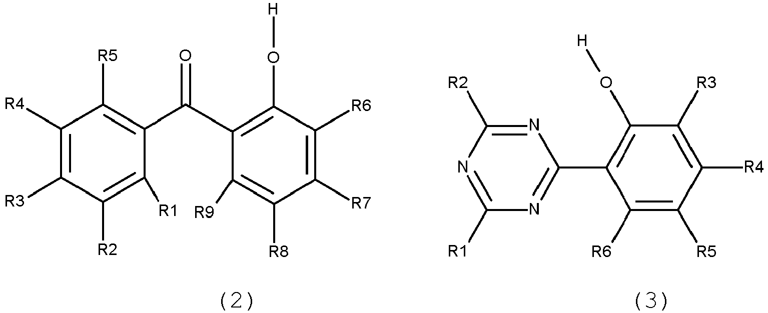 mit R1, R2, R3, R4, R5, R6, R7, R8, R9, R10, R11, R12, R13, R14 = H, Halogenatom, Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert, mit der Maßgabe das mindestens einer der Reste R1, R2, R3, R4, R5, R6, R7, R8, R9, R10, R11, R12, R13, R14 eine Carboxy-, Sulfoxy- oder Phosphatgruppe mit einem Alkali-, Erdalkali- oder Ammoniumion als Gegenion trägt.

Bevorzugt werden dabei UV-Absorber gemäß Formel 4 eingesetzt, die von UV-Absorbern vom Typ 2-Hydroxybenzotriazol abgeleitet sind: 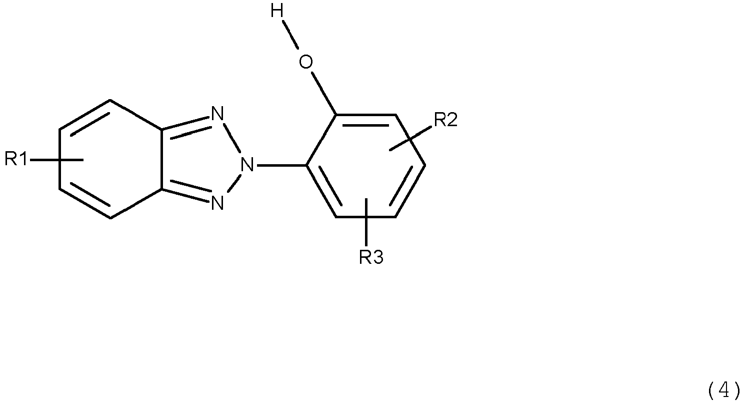 wobei R1, R2 und R3 die genannten Bedeutungen aufweisen Besonders bevorzugt werden UV-Absorber gemäß Formel 5 eingesetzt, 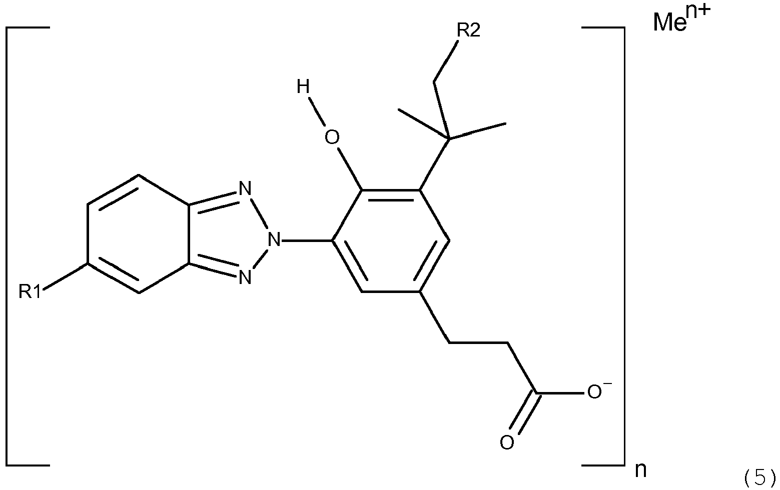 mit R1 = H oder Halogenatom, R2 = H oder CH₃ und Meⁿ⁺ = Li⁺, Na⁺, K⁺, Mg²⁺, Ca²⁺, Zn²⁺, NH₄⁺

Besonders bevorzugt enthalten erfindungsgemäße Folien einen UV-Absorber in Form eines Alkali-, Erdalkali- oder Ammoniumsalzes, abgeleitet von der Verbindung 3-(2H-benzotriazol-2-yl)-5-(1,1-dimethyl)-4-hydroxybenzolpropansäure, CAS-Nr. 84268-36-0 oder der Verbindung 3-(5-chloro-2H-benzotriazole-2-yl)-5-(1,1-dimethyl)-4-hydroxybenzolpropansäure, CAS-Nr. 83573-67-5.

Diese UV-Absorbersäuren sind kommerziell z.B. von der Firma Everlight unter dem Handelsnamen Eversorb R01 und Eversorb R04 erhältlich.

### Fluorophore

Die Anregung der erfindungsgemäß eingesetzten Fluorophore erfolgt bevorzugt durch Strahlung im nicht-sichtbaren Bereich des Lichts, wie im Wellenlängenbereich 300 - 420 nm, bevorzugt im Wellenlängenbereich 350 - 400 nm und am meisten bevorzugt im Wellenlängenbereich 365 - 385 nm. Als Strahlungsquelle können insbesondere UV-Laser oder UV-LEDs eingesetzt werden.

Die Folie A enthält ein oder mehrere Fluorophore, welche bevorzugt nicht oder wenig migrieren bzw. diffundieren. In einer beispielhaften Anwendung des Fluoreszenz-Displays als Windschutzscheibe eines KFZ ermöglich diese Anordnung, dass die Fluorophore nicht von der Seite 4 einer Displayeinheit zur Seite 2 migrieren und dort unerwünscht von Sonnenlicht angeregt werden.

Als Fluorophore mit keiner oder nur geringer Diffusionsneigung können in Folie A eingesetzt werden: fluoreszierende anorganische Nanopartikel, in der umgebenden Matrix schwer lösliche Fluoreszenzfarbstoffe z.B. substituierte Perylene bzw. Rylene oder Abkömmlinge des Quinacridons, Fluoreszenzfarbstoffe mit ionischen Gruppen wie etwa Tinopal CBS-X oder ionischem Charakter wie z.B. Uranin sowie polymere Fluorophore.

Besonders geeignet als Fluorophore mit geringer Diffusionsneigung sind die folgenden Fluorophore und deren Aklali- oder Erdalkalisalze:

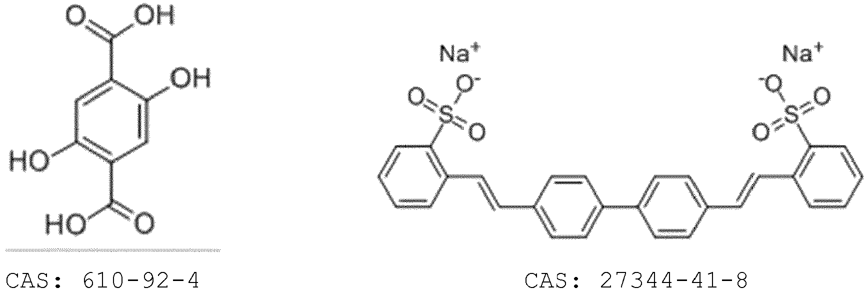

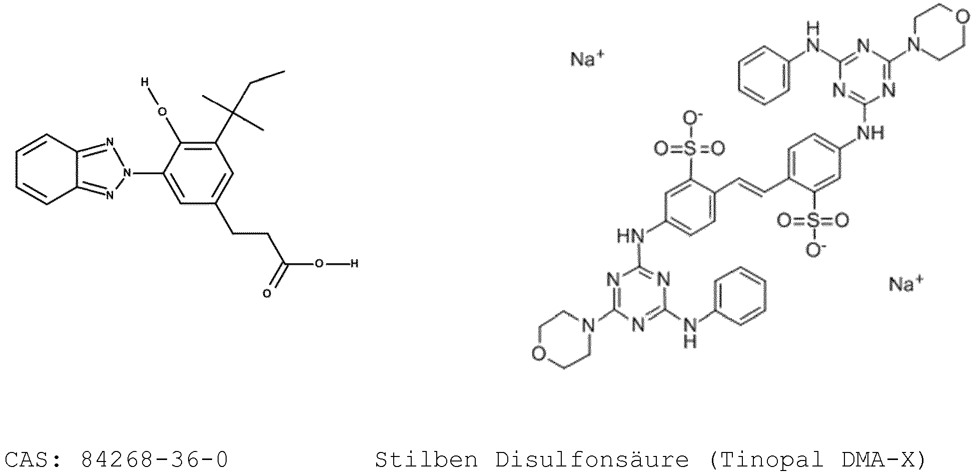

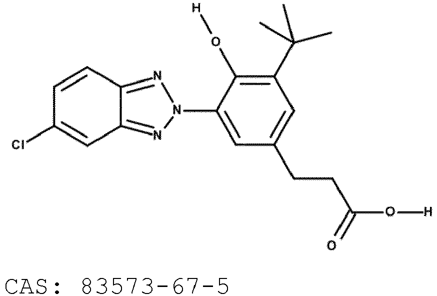

Als polymere Fluorophore können fluoreszierende Polymere eingesetzt werden, welche die lichtemittierenden Einheiten innerhalb der Polymerkette oder an eine Polymerkette angeknüpft enthalten. Damit die Diffusionsneigung solch eines Polymeres in der umgebenden Matrix minimal ist, sollten erfindungsgemäß verwendbare fluoreszierende Polymere ein Molekulargewicht Mn von mehr als 2000, bevorzugt mehr als 5000 und am meisten bevorzugt mehr als 10000 g/mol aufweisen.

Die lokale Konzentration der fluoreszierenden Polymere in bzw. an der umgebenden Matrix wird so gewählt, dass eine hohe Fluoreszenz erhalten wird und keine starke Fluoreszenzlöschung erfolgt.

Beispiele für fluoreszierende Polymere, die im Rahmen der Erfindung eingesetzt werden können, sind unter vielen anderen: Poly(9-anthracenylmethyl acrylat), Poly(9-anthracenylmethyl methacrylat), Poly(3,3',4,4'-benzophenonetetracarboxylic dianhydride-alt-Acridine Yellow G), Poly(3,3',4,4'-benzophenonetetracarboxylic dianhydride-alt-3,6-diaminoacridine hemisulfat), Poly(fluorescein O-acrylat), Poly(fluorescein O-methacrylat), Poly[(methyl methacrylat)-co-(7-(4-trifluoromethyl)coumarin acrylamid)], Poly[(methyl methacrylat)-co-(9-anthracenylmethyl methacrylate)], Poly[(methyl methacrylat)-co-(7-(4-trifluoromethyl)coumarin methacrylamid)], Poly(pyromellitic dianhydrid-alt-acridin yellow G), Poly(1,4-phenylen) (PPP), Polyfluorene (PFO), Poly(thiophene), Polyquinoline, Poly[2,5-bis(3',7'-dimethyloctyloxy)-1,4-phenylenevinylen], Poly[9,9-bis-(2-ethylhexyl)-9H-fluorene-2,7-diyl], Poly[2-(2',5'-bis(2"-ethylhexyloxy)phenyl)-1,4-phenylenevinylen], Poly{[2-[2',5'-bis(2"-ethylhexyloxy)phenyl]-1,4-phenylenevinylen]-co-[2-methoxy-5-(2'-ethylhexyloxy)-1,4-phenylenevinylen]}, Poly[2,5-bisoctyloxy)-1,4-phenylenevinylen], Poly(2,5-bis(1,4,7,10-tetraoxaundecyl)-1,4-phenylenevinylen), Poly(3-cyclohexylthiophen-2,5-diyl), Poly(9,9-di-n-dodecylfluorenyl-2,7-diyl), Poly[(9,9-dihexylfluoren-2,7-diyl)-co-(anthracen-9,10-diyl)], Poly[(9,9-dihexylfluoren-2,7-diyl)-alt-(2,5-dimethyl-1,4-phenylen)], Poly(9,9-n-dihexyl-2,7-fluoren-alt-9-phenyl-3,6-carbazol), Poly[(9,9-dihexylfluoren-2,7-diyl)-co-(9-ethylcarbazol-2,7-diyl)], Poly(2,5-dihexyloxy-1,4-phenylenevinylen), Poly(9,9-di-n-octylfluorenyl-2,7-diyl), Poly(3-octylthiophen-2,5-diyl), Poly(3-octylthiophen-2,5-diyl), Poly[(o-phenylenevinylen)-alt-(2-methoxy-5-(2-ethylhexyloxy)-p-phenylenevinylen)], Poly[tris(2,5-bis(hexyloxy)-1,4-phenylenevinylen)-alt-(1,3-phenylenevinylen)], Poly[(1,4- phenylen-1,2-diphenylvinylen)], Polyquinoline

### Ausführungsformen der Fluoreszenz-Displays

Das erfindungsgemäße Fluoreszenz-Display kann Fluorophore auch nur in Teilbereichen der Schichten enthalten, was zu einem Fluoreszenzband statt dem bei Windschutzscheiben üblichen Farbkeil/Farbband führt. Es ist auch möglich, Folie A hinter dem Bereich anzuordnen, in welchem sich im Laminat ein pigmentierter Farbkeil von Folie B befindet.

Der oder die Fluorophore können bei der Herstellung der weichmacherarmen Folie A, z.b. in einem Extrusionsverfahren, in diese eingebracht werden.

Alternativ ist auch ein Aufbringen auf eine oder beide Oberflächen der von Folie A möglich. Hierfür kommen prinzipiell sämtliche geeigneten Beschichtungs-, Druck-, Transfer-, Sprayverfahren etc. in Frage. Hierdurch kann das Fluorophor in hoher lokaler Konzentration an der Seite 3 aufgebracht werden und verbleibt an der unmittelbar anliegenden Grenzfläche. Die dahinterliegende Folienschicht enthält zwar einen zur Migration fähigen UV-Absorber, dieser kann aber nicht mit zu hoher Extinktionswirkung vor die Fluorophore gelangen. Der weitere große Vorteil der Ausführungsform ist, dass Folie A aufgrund ihrer Weichmacherarmheit trotz der geringen Dicke zugfest und leicht zu handhaben ist und leicht auf einer Glasoberfläche positioniert werden kann. Nach Auflegen einer weichmacherhaltigen Folie B und Herstellen eines Vor- und Endverbundes wird auf einfache ein Fluoreszenz-Display erhalten, welches entweder vollflächig oder nur in dem gewünschten Bereich die Fluoreszenzfunktion aufweist.

Die Oberflächenbeschichtung mit Fluorophor kann vollflächig oder in Form von Mustern bzw. Zeichen, z.B. Buchstaben oder Warnsymbolen erfolgen.

Die erfindungsgemäß verwendeten Folien A und B können die folgenden weiteren Inhaltstoffe aufweisen
a. einen Alkalititer im Bereich 0 - 50, 0-40, 0-35, 5-35. Hierdurch wird die Zersetzung der Fluorophore durch freie Säure oder hohe Alkalinität vermieden.
b. Lichtstablisatoren zur Unterdrückung von Radikalkettenreaktionen wie vom Typ HAS / HALS / NOR-HALS (sterisch gehinderten Aminoethern)
c. phenolisches Antioxidantien wie BHT des Typs Lowinox 44B25 oder Irganox 245

Insbesondere können die unter b. und c. genannten Stabilisatoren während der Laminiervorgangs oder danach von der weichmacherhaltigen Folie B in die aus Folie A hervorgegangene Folienlage A übergehen und dort zur Verbesserung der Stabilität der Fluorophore beitragen. Lichtstabilisatoren können insbesondere sterisch gehinderte Amine vom Typ HAS / HALS / NOR-HALS (sterisch gehinderte Aminoether wie die kommerziell erhältlichen Produkte Tinuvin 123 (NOR-HALS), Tinuvin 144, Tinuvin 622, Tinuvin 770 und dessen Di-N-methyliertes Derivat, der Fa. Ciba Specialities. Besonders gut geeignet sind ADK Stab LA-57, LA-52 oder LA-62 der Fa. Asahi Denka Co. oder UVINUL 4050 H der BASF AG. Lichtstabilisatoren werden insbesondere in einem Anteil von 0,001 bis 1 Gew.% (bezogen auf die Folienmischung) eingesetzt. Zusätzlich kann Folie B
d. aus mindestens zwei Teilfolien B' und B" bestehen, die optional einen unterschiedlichen Weichmachergehalt aufweisen. Hiermit wird eine akustisch dämpfende Lage enthalten, so dass Folie B bei Lamination zwischen 2 x 2.1 mm Glas und Messung gemäß ISO TS 16940 bei 20°C einen Verlustfaktor der lsten Mode von mehr als 0.15, bevorzugt 0.20 bevorzugt 0.25 aufweist. Die akustisch dämpfende Lage kann ebenfalls aus weichmacherhaltigem Polyvinylacetal bestehen.
e. im oberen Bereich ein sog. Farbband (Bandfilterbereich) aufweisen. Hierzu kann entweder der obere Teil der Folie mit einer entsprechend eingefärbten Polymerschmelze coextrudiert werden oder es kann in einem Mehrschichtsystem eine der Teilfolien eine unterschiedliche Färbung aufweisen. In der vorliegenden Erfindung ist dies auch durch ganz oder teilweises Einfärben zumindest einer Teilfolie B realisierbar.
f. ein keilförmig verlaufendes Dickenprofil zur Erzeugung einer konventionellen HUD Funktion

Weitere Gegenstände der Erfindung ist die Verwendung der erfindungsgemäßen Fluoreszenz-Displays aus Glas/Glaslaminate unter Verwendung einer Zwischenschichtfolie mit den genannten Eigenschaften und/oder Zusammensetzungen, als KFZ-Windschutzscheibe, KFZ-Seitenverglasung, Verglasungen für Flugzeuge, Bahnen oder Schiffe und für Anwendungen im Baubereich wie Schaufenster, Aufzüge, oder Fassadenverglasung.

Hierzu kann in einer weiteren Variante Seite 4 des Glas/Glaslaminates mit einer in einem Wellenlängenbereich von 280 - 420 nm antireflektierend wirksamen Oberfläche (Beschichtung) versehen sein.

In einer weiteren Variante kann dieses Glas/Glaslaminat zur vereinfachten Durchstrahlung die innenliegende Glasscheibe eine geringere Dicke als die Äußere Glasscheibe aufweisen. Für KFZ-Anwendungen weist die Aussenscheibe bevorzugt eine Dicke von kleiner/gleich 3 mm, bevorzugt kleiner 2.6, bevorzugt kleiner 2 mm auf. Die zugehörige Innenscheibe weist bevorzugt eine Dicke von kleiner/gleich 2.6 mm, 2.2 mm, 2.0 mm, 1.8 mm, 1.6 mm auf.

Weiter Gegenstand der Erfindung ist eine KFZ-Fahrgastzelle mit einer Windschutzscheibe die ein erfindungsgemäßes erfindungsgemäßen Fluoreszenz-Displays aus Glas/Glaslaminate unter Verwendung einer Zwischenschichtfolie mit den genannten Eigenschaften und/oder Zusammensetzungen aufweist und Seitenscheiben und gegebenenfalls transparentes Dachmodul aus oder mit UV-Absorbierendem Glas.

Hierdurch wird das Fluoreszenz-Display in der Windschutzscheibe gegen Einstrahlen von Außenlicht und den damit verbundenen Kontrastverlust oder unkontrollierte Anregung geschützt. Das UV-Absorbierende Glas kann z.B. ein UV-absorbierendes monolithisches Glas oder ein Verbundglas mit einer üblichen, UV-Absorber enthaltenden PVB-Folie sein. Bevorzugt hat das genannte UV-absorbierende Glas eine UV-Transmission von weniger als 10% und bevorzugt weniger als 4% gemäß Bewertung und Messung nach ISO 13837, Convention" A" (2008).

Die Herstellung der erfindungsgemäß verwendeten Folien A und B erfolgt in der Regel durch Extrusion oder Coextrusion, die unter bestimmten Bedingungen (Schmelzedruck, Schmelzetemperatur und Werkzeugtemperatur) unter Erhalt einer Schmelzbruchoberfläche, d.h. einer stochastischen Oberflächenrauheit.

Zusätzlich kann einer bereits hergestellten Folie A oder B durch einen Prägevorgang zwischen mindestens einem Walzenpaar eine regelmäßige, nicht stochastische Rauhigkeit aufgeprägt werden. Geprägte Folien weisen in der Regel ein verbessertes Entlüftungsverhalten bei der Laminierung auf und werden bevorzugt im Automobilbereich eingesetzt.

## Patentansprüche

1. Fluoreszenz-Display, hergestellt durch laminieren von mindestens einer Folie A enthaltend ein Polyvinylacetal PA und optional mindestens einen Weichmacher WA und mindestens einer Folie B enthaltend ein Polyvinylacetal PB und mindestens einen Weichmacher WB zwischen zwei Glasscheiben, **dadurch gekennzeichnet, dass** jeweils vor dem Laminieren Folie A weniger als 22 Gew.% Weichmacher WA und 0,001 bis 5 Gew.% Fluorophore und Folie B mindestens 22 Gew.% Weichmacher WB und 0,005 - 5 Gew. % UV-Absorber aufweist.

2. Fluoreszenz-Display nach Anspruch 1 **dadurch gekennzeichnet, dass** Folie A ein Fluorophor mit geringer Diffusionsneigung aufweist.

3. Fluoreszenz-Display nach Anspruch 1 oder 2 **dadurch gekennzeichnet, dass** Folie B UV-Absorber mit geringer Diffusionsneigung aufweist.

4. Fluoreszenz-Display nach einem der Ansprüche 1 bis 3 **dadurch gekennzeichnet, dass** Folie A zwischen eine Folie B und eine Folie C enthaltend ein Polyvinylacetal PC und mindestens 22 Gew.% mindestens eines Weichmachers WC angeordnet ist.

5. Fluoreszenz-Display nach Anspruch 4 **dadurch gekennzeichnet, das** Folie C keinen UV-Absorber oder einen nicht bei der Anregungswellenlänge des Fluorophor absorbierenden UV-Absorber aufweist.

6. Fluoreszenz-Display nach einem der Ansprüche 1 bis 5 **dadurch gekennzeichnet, dass** die Folien A und/oder B Lichtstablisatoren zur Unterdrückung von Radikalkettenreaktionen aufweisen.

7. Fluoreszenz-Display nach einem der Ansprüche 1 bis 6 **dadurch gekennzeichnet, dass** die Folien A und/oder B phenolischen Antioxidants aufweisen.

8. Fluoreszenz-Display nach einem der Ansprüche 1 bis 7 **dadurch gekennzeichnet, dass** die Folie A ein Polyvinylacetal PA mit einem Anteil an Vinylalkoholgruppen von 6 bis 26 Gew.% und die Folie B ein Polyvinylacetal PB mit einem Anteil an Vinylalkoholgruppen von 14 bis 26 Gew.% aufweist.

9. Fluoreszenz-Display nach einem der Ansprüche 1 bis 8 **dadurch gekennzeichnet, dass** Folie A im Randbereich um mindestens 1 mm kleiner ist als mindestens eine Glasscheibe sodass die Folie B in diesem Randbereich in direktem Kontakt mit mindestens einer Glasscheibe ist.

10. Fluoreszenz-Display nach einem der Ansprüche 1 bis 8 **dadurch gekennzeichnet, dass** Folie A mindestens eine Aussparung aufweist, sodass die Folie B durch diese Aussparung in direktem Kontakt mit mindestens einer Glasscheibe ist.

11. Fluoreszenz-Display nach einem der Ansprüche 1 bis 10 **dadurch gekennzeichnet, dass** Folie B aus mindestens zwei Teilfolien B' und B" besteht, die einen unterschiedlichen Weichmachergehalt aufweisen.

12. Fluoreszenz-Display nach einem der Ansprüche 1 bis 11 **dadurch gekennzeichnet, dass** Folie B ein keilförmiges Dickenprofil aufweist.

13. Verwendung der Fluoreszenz-Displays nach einem der Ansprüche 1 bis 12 als Displaysystem für KFZ-Windschutzscheiben, KFZ-Seitenverglasung, Verglasungen für Flugzeuge, Bahnen oder Schiffe und für Anwendungen im Baubereich wie Schaufenster, Aufzüge, oder Fassadenverglasungen.

14. KFZ-Fahrgastzelle mit einer Windschutzscheibe enthaltend ein Fluoreszenz-Display nach einem der Ansprüche 1 bis 12 und Seitenscheiben aus oder mit UV-Absorbierendem Glas.

15. Verfahren zur Herstellung eines Fluoreszenz-Display nach einem der Ansprüche 1 bis 12 **dadurch gekennzeichnet, dass** die Folie A auf einer Glasscheibe positioniert, anschließend mit mindestens einer Folie B abgedeckt wird, auf die eine zweite Glasscheibe gelegt wird.

## Claims

1. A fluorescent display, manufactured by lamination of at least one film A containing a polyvinyl acetal PA and, optionally, at least one plasticiser WA and of at least one film B containing a polyvinyl acetal PB and at least one plasticiser WB between two glass panes, **characterised in that** film A comprises less than 22 wt. % plasticiser WA and comprises 0.001 to 5 wt. % fluorophores and film B comprises at least 22 wt. % plasticiser WB and comprises 0.005-5 wt. % UV absorber, in each case prior to lamination.

2. The fluorescent display according to claim 1, **characterised in that** film A comprises a fluorophore with low diffusivity.

3. The fluorescent display according to claim 1 or 2, **characterised in that** film B comprises UV absorber with low diffusivity.

4. The fluorescent display according to one of claims 1 to 3, **characterised in that** film A is arranged between a film B and a film C containing a polyvinyl acetal PC and at least 22 wt. % of at least one plasticiser WC.

5. The fluorescent display according to claim 4, **characterised in that** film C comprises no UV absorber or comprises a UV absorber that does not absorb at an excitation wavelength of the fluorophore.

6. The fluorescent display according to one of claims 1 to 5, **characterised in that** the films A and/or B comprise light stabilisers for the suppression of radical chain reactions.

7. The fluorescent display according to one of claims 1 to 6, **characterised in that** films A and/or B comprise phenolic antioxidants.

8. The fluorescent display according to one of claims 1 to 7, **characterised in that** film A comprises a polyvinyl acetal PA with a content of vinyl alcohol groups of from 6 to 26 wt. % and film B comprises a polyvinyl acetal PB with a content of vinyl alcohol groups of from 14 to 26 wt. %.

9. The fluorescent display according to one of claims 1 to 8, **characterised in that** film A is at least 1 mm smaller in the edge area than at least one glass pane, so that film B is in direct contact with at least one glass pane in this edge area.

10. The fluorescent display according to one of claims 1 to 8, **characterised in that** film A has at least one opening, so that film B is in direct contact with at least one glass pane through this opening.

11. The fluorescent display according to one of claims 1 to 10, **characterised in that** film B consists of at least two sub-films B' and B" having a different plasticiser content.

12. The fluorescent display according to one of claims 1 to 11, **characterised in that** film B has a wedge-shaped thickness profile.

13. Use of the fluorescent display according to one of claims 1 to 12 as a display system for motor vehicle windscreens, motor vehicle side glass, glass for aircraft, trains or ships, and for applications in the construction industry, such as display windows, elevators or façade glass.

14. A motor vehicle passenger compartment having a windscreen containing a fluorescent display according to one of claims 1 to 12 and side panes consisting of or comprising UV-absorbing glass.

15. A method for manufacturing a fluorescent display according to one of claims 1 to 12, **characterised in that** the film A is positioned on a glass pane, then is covered with at least one film B, and a second glass pane is placed thereon.

## Revendications

1. Ecran à fluorescence, fabriqué par laminage d'au moins un film A contenant un polyvinylacétal PA et en option au moins un plastifiant WA et d'au moins un film B contenant un polyvinylacétal PB et au moins un plastifiant WB entre deux vitres , **caractérisé en ce que** respectivement avant le laminage, le film A comporte moins de 22 % en poids de plastifiant WA et de 0,001 à 5 % en poids de fluorophores et le film B comporte au moins 22 % en poids de plastifiant WB et de 0,005 à 5 % en poids d'absorbeur UV.

2. Ecran à fluorescence selon la revendication 1, **caractérisé en ce que** le film A comporte un fluorophore à faible tendance à la diffusion.

3. Ecran à fluorescence selon la revendication 1 ou 2, **caractérisé en ce que** le film B comporte des absorbeurs UV à faible tendance à la diffusion.

4. Ecran à fluorescence selon l'une quelconque des revendications 1 à 3, **caractérisé en ce que** le film A est placé entre un film B et un film C contenant un polyvinylacétal PC et au moins 22 % en poids d'au moins un plastifiant WC.

5. Ecran à fluorescence selon la revendication 4, **caractérisé en ce que le** film C ne comporte aucun absorbeur UV ou un absorbeur UV non absorbant à la longueur d'onde d'excitation du fluorophore.

6. Ecran à fluorescence selon l'une quelconque des revendications 1 à 5, **caractérisé en ce que** les films A et/ou B comportent des stabilisants à la lumière, destinés à réprimer des réactions radicalaires en chaîne.

7. Ecran à fluorescence selon l'une quelconque des revendications 1 à 6, **caractérisé en ce que** les films A et/ou B comportent des antioxydants phénoliques.

8. Ecran à fluorescence selon l'une quelconque des revendications 1 à 7, **caractérisé en ce que** le film A comporte un polyvinylacétal PA avec une part de groupes alcool vinylique de 6 à 26 % en poids et le film B comporte un polyvinylacétal PB avec une part de groupes alcool vinylique de 14 à 26 % en poids.

9. Ecran à fluorescence selon l'une quelconque des revendications 1 à 8, **caractérisé en ce que** dans la zone marginale, le film A est plus petit d'au moins 1 mm qu'au moins une vitre, de sorte que dans ladite zone marginale, le film B soit en contact direct avec au moins vitre.

10. Ecran à fluorescence selon l'une quelconque des revendications 1 à 8, **caractérisé en ce que** le film A comporte au moins une encoche, de sorte qu'à travers cette encoche, le film B soit en contact direct avec au moins vitre.

11. Ecran à fluorescence selon l'une quelconque des revendications 1 à 10, **caractérisé en ce que** le film B est constitué d'au moins deux films partiels B' et B" qui comportent une teneur en plastifiant différente.

12. Ecran à fluorescence selon l'une quelconque des revendications 1 à 11, **caractérisé en ce que** le film B comporte un profil d'épaisseur cunéiforme.

13. Utilisation de l'écran à fluorescence selon l'une quelconque des revendications 1 à 12 en tant que système d'écran pour des pare-brise de véhicules automobiles, des vitres latérales de véhicules automobiles, des vitrages d'avion, de trains ou de bateaux et pour des applications dans le secteur du bâtiment, telle que des vitrines, des ascenseurs ou des vitrages de façade.

14. Habitacle de véhicule automobile pourvu d'un pare-brise contenant un écran à fluorescence selon l'une quelconque des revendications 1 à 12 et des vitres latérales en ou pourvues d'un verre absorbant les UV.

15. Procédé, destiné à fabriquer un écran à fluorescence selon l'une quelconque des revendications 1 à 12, **caractérisé en ce qu'**on positionne le film A sur une vitre, on le recouvre par la suite d'au moins un film B, puis on le pose sur la deuxième vitre.
